(19) Europäisches Patentamt
European Patent Office
Office européen des brevets

(11) **EP 3 602 215 B1**

(12) **EUROPÄISCHE PATENTSCHRIFT**

(45) Veröffentlichungstag und Bekanntmachung des Hinweises auf die Patenterteilung:
**09.02.2022 Patentblatt 2022/06**

(21) Anmeldenummer: **18723721.9**

(22) Anmeldetag: **23.04.2018**

(51) Internationale Patentklassifikation (IPC):
**G05B 19/406** (2006.01)

(52) Gemeinsame Patentklassifikation (CPC):
**G05B 19/406;** G05B 2219/31282; G05B 2219/31437; G05B 2219/41057

(86) Internationale Anmeldenummer:
**PCT/EP2018/060283**

(87) Internationale Veröffentlichungsnummer:
**WO 2018/197382 (01.11.2018 Gazette 2018/44)**

(54) **VERFAHREN UND VORRICHTUNG ZUR AUTOMATISCHEN GENERIERUNG EINES AUSSCHLIESSLICH FÜR DIAGNOSEZWECKE BESTIMMTEN STEUERUNGSPROGRAMMS FÜR EINE PRODUKTIONS- ODER WERKZEUGMASCHINE**

METHOD AND DEVICE FOR AUTOMATIC GENERATION A MANAGEMENT PROGRAM EXCLUSIVELY FOR DIAGNOSTIC PURPOSES FOR A PRODUCTION OR MACHINE TOOL

PROCÉDÉ ET DISPOSITIF DE GÉNÉRATION AUTOMATIQUE D'UN PROGRAMME DE COMMANDE RÉSERVÉ EXCLUSIVEMENT À DES FINS DE DIAGNOSTIC POUR UNE MACHINE-OUTILS OU DE PRODUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.04.2017 EP 17167862**

(43) Veröffentlichungstag der Anmeldung:
**05.02.2020 Patentblatt 2020/06**

(73) Patentinhaber: **Siemens Aktiengesellschaft 80333 München (DE)**

(72) Erfinder:
• **HASCHKA, Markus Stephan 76137 Karlsruhe (DE)**
• **SCHÄFERS, Elmar 90763 Fürth (DE)**
• **SCHÜR, Torsten 91058 Erlangen (DE)**

(56) Entgegenhaltungen:
**EP-A1- 2 690 513**

**Beschreibung**

Die Erfindung betrifft ein Verfahren sowie eine nach dem Verfahren arbeitende Vorrichtung zur automatischen Generierung eines Steuerungsprogramms für eine Produktions- oder Werkzeugmaschine. Das generierte Steuerungsprogramm ist ausschließlich für Diagnosezwecke und damit ausdrücklich nicht zur Fertigung oder Bearbeitung eines Werkstücks oder dergleichen bestimmt.

Unter einer Produktions- oder Werkzeugmaschine ist allgemein ein programmgesteuertes Automatisierungssystem und damit zum Beispiel auch ein Industrieroboter zu verstehen. Hier und im Folgenden wird der Ausdruck Produktions- oder Werkzeugmaschine als Oberbegriff für Begriffe wie Werkzeugmaschine, Industrieroboter und dergleichen verwendet. Als Werkzeugmaschine werden bekanntlich alle Maschinen bezeichnet, die unter anderem im Maschinenbau und im Werkzeugbau zur Bearbeitung von Werkstücken mit Werkzeugen dienen. Zu den Werkzeugmaschinen gehören auch sogenannte NC- oder CNC-Maschinen. Ein Industrieroboter ist bekanntlich eine universelle, programmierbare Maschine, die neben einer Bearbeitung von Werkstücken auch zur Handhabung von Werkstücken sowie für Montagezwecke bestimmt und eingerichtet ist.

Mittels des automatisch zu generierenden und ausschließlich für Diagnosezwecke bestimmten Steuerungsprogramms soll eine zur Ermittlung zumindest einer sogenannten mechatronischen Kenngröße günstige Anregung einer Vorschubachse einer im Folgenden mitunter auch nur kurz als Maschine bezeichneten Produktions- oder Werkzeugmaschine der eingangs genannten Art erreicht werden.

Eine mechatronische Kenngröße einer Vorschubachse einer solchen Maschine beschreibt zum Beispiel eine Steifigkeit des Antriebsstrangs der Vorschubachse über dem Verfahrweg, ein Spiel der von der Vorschubachse umfassten Komponenten (Spindelmutter, Führungsschuhe etc.), Reibeffekte in solchen Komponenten, Gleichlauffehler bezogen auf eine Grundperiode der Komponente und so weiter.

Aus einer von der vorliegenden Erfindung ausgehenden Betrachtung folgt die Erkenntnis, dass es technisch grundsätzlich möglich ist, solche mechatronischen Kenngrößen aus definierten Bewegungen von Maschinenachsen einer programmgesteuerten Produktions- oder Werkzeugmaschine zu bestimmen, wie dies z.B. in der EP 2 690 513 A1 beschrieben ist.

In der EP3176657 A1 ist eine Möglichkeit zur Ermittlung mechatronischer Kenngrößen beschrieben. Danach drückt sich ein mechatronischer Fingerabdruck in physikalischen Größen von Komponenten oder Systemen aus. Steuerungsseitig werden - wie bereits heute - Messdaten im laufenden Betrieb oder außerhalb der Produktion durch Identifikationsmessungen ermittelt. Die Steuerung berechnet dann aus diesen Messungen die physikalischen Größen, die präzise eine Komponente (z.B. Kugelgewindetrieb) oder ein System (z.B. Antriebsstrang, Werkzeugmagazin) bezüglich bestimmter physikalischer Eigenschaften beschreiben.

Nach derzeitigem Wissensstand ist eine automatische Generierung eines nur für Diagnosezwecke bestimmten Steuerungsprogramms für eine Produktions- oder Werkzeugmaschine der eingangs genannten Art, nämlich zur Ermittlung zumindest einer mechatronischen Kenngröße einer Vorschubachse einer solchen Maschine, bisher nicht erwogen worden.

Eine Aufgabe der vorliegenden Erfindung besteht entsprechend darin, eine Möglichkeit zur automatischen Generierung eines solchen Steuerungsprogramms anzugeben. Im Weiteren besteht eine Aufgabe der vorliegenden Erfindung darin, eine einfache und automatisierbare Möglichkeit zur Ermittlung zumindest einer mechatronischen Kenngröße einer Vorschubachse einer Maschine der eingangs genannten Art anzugeben, wobei die Ermittlung der zumindest einen mechatronischen Kenngröße im Zusammenhang mit einer Ausführung eines automatisch generierten Steuerungsprogramms der oben genannten Art erfolgt.

Diese Aufgabe wird erfindungsgemäß mittels eines Verfahrens zur automatischen Generierung eines ausschließlich für Diagnosezwecke bestimmten Steuerungsprogramms für eine Produktions- oder Werkzeugmaschine mit den Merkmalen des Anspruchs 1 gelöst.

Im Interesse einer besseren Lesbarkeit der nachfolgenden Beschreibung wird im Folgenden eine Produktions- oder Werkzeugmaschine der oben genannten Art mitunter kurz als Maschine bezeichnet. Eine Vorschubachse einer solchen Maschine wird im Folgenden mitunter nur kurz als Achse oder Maschinenachse bezeichnet. Des Weiteren wird die Beschreibung im Interesse einer besseren Lesbarkeit, aber ohne Verzicht auf eine weitergehende Allgemeingültigkeit, zum Teil mit einer Beschreibung einer Ermittlung genau einer mechatronischen Kenngröße fortgesetzt. Dies vermeidet ansonsten notwendige Formulierungen wie "zumindest eine mechatronische Kenngröße", "die oder jede mechatronische Kenngröße" und so weiter. Solche Formulierungen sind aber im Folgenden bei jeder Erwähnung genau einer mechatronischen Kenngröße stets mitzulesen und allgemein ist bei jeder Erwähnung genau einer mechatronischen Kenngröße mitzulesen, dass anstelle einer mechatronischen Kenngröße auch mehrere mechatronische Kenngrößen ermittelt, abgespeichert oder in sonstiger Art und Weise be- oder verarbeitet werden können.

Bei dem hier vorgeschlagenen Verfahren zur automatischen Generierung eines für Diagnosezwecke bestimmten Steuerungsprogramms für eine Produktions- oder Werkzeugmaschine ist zwecks Ermittlung zumindest einer mechatronischen Kenngröße einer Achse der Maschine Folgendes vorgesehen: Das Steuerungsprogramm wird mittels eines in Form eines Computerprogramms implementierten Algorithmus anhand von frei wählbaren Parametern und/oder maschinenspezifischen Parametern generiert. Auch die frei wählbaren Parameter beziehen sich dabei selbstverständlich unmittelbar oder mittelbar auf die Maschine oder die jeweilige Achse und legen zum Beispiel die Dauer einer Fahrt mit konstanter Geschwindigkeit fest. Das resultierende, automatisch generierte Steuerungsprogramm definiert ein Verfahrprofil, nämlich ein Verfahrprofil mit zumindest einer Messfahrt, für die jeweilige Maschinenachse. Die zumindest eine Messfahrt bewirkt eine zur Bestimmung zumindest einer mechatronischen Kenngröße der Achse geeignete Anregung der Maschine bzw. der Achse. Der Umstand, dass sich eine solche geeignete Anregung ergibt, basiert darauf, dass der Algorithmus bei der Generierung des Steuerungsprogramms und damit auch bei der Definition des in Form des Steuerungsprogramms kodierten Verfahrprofils die oben genannten Parameter verwendet, so dass zum Beispiel Verfahrbewegungen mit maximalen Geschwindigkeiten, maximalen Beschleunigungen usw. oder einem vorgegebenen oder vorgebbaren prozentualen Anteil der maximalen Geschwindigkeit, maximalen Beschleunigung usw.

resultieren. Für eine Messfahrt wird anhand eines vorgegebenen limitierenden Fahrwegs eine Anzahl N von möglichen Beschleunigungssprüngen entlang des Fahrwegs ermittelt und die Messfahrt die ermittelte Anzahl von Beschleunigungssprüngen und vor und nach jedem Beschleunigungssprung eine Konstantgeschwindigkeitsfahrt umfasst.

In einem solchen von einer Produktions- oder Werkzeugmaschine im Betrieb ausführbaren Steuerungsprogramm, insbesondere einem Steuerungsprogramm in Form eines NC-Programms, sind die Bewegungen jeder Maschinenachse derart definiert, dass eine mechatronische Kenngröße anhand von erzeugten Messdaten automatisch bestimmt werden kann.

Im Grundsatz sind bei allen Produktions- oder Werkzeugmaschinen deren Steuerungsprogramme gleichartig, also zumindest gleich aufgebaut, und umfassen zum Beispiel Anweisungen zum Fahren mit einer konstanten Geschwindigkeit, Anweisungen für Beschleunigungsvorgänge, Anweisungen für sogenannte Mikrometer-Schritte und so weiter. Deshalb ist eine Anpassung des Algorithmus an unterschiedliche Produktions- oder Werkzeugmaschinen oder deren Achsen leicht möglich, so dass mittels des hier vorgeschlagenen Ansatzes Steuerungsprogramme für grundsätzlich beliebige Produktions- oder Werkzeugmaschinen zum Anregen der jeweiligen Maschinenachse zum Ermitteln zumindest einer mechatronischen Kenngröße generiert werden können.

Der Vorteil der hier vorgeschlagenen Lösung liegt darin, dass mit automatisch generierbaren Steuerungsprogrammen mit zumindest einer achsspezifischen Messfahrt zum Anregen einer Maschinenachse einer jeweiligen Produktions- oder Werkzeugmaschine der eingangs genannten Art ausschließlich für Diagnosezwecke, nämlich zum Ermitteln zumindest einer mechatronischen Kenngröße, eine Möglichkeit für eine Erstellung einer umfangreichen Datenbasis mit mechatronischen Kenngrößen geschaffen wird.

Ein jeweiliger Wert der zumindest einen mechatronischen Kenngröße ist eine Art mechatronischer Fingerabdruck der jeweiligen Achse und erlaubt einen Vergleich der Achse, insbesondere einen Vergleich eines durch den Wert einer mechatronischen Kenngröße ausgedrückten Zustands einer Achse, mit anderen gleichen oder gleichartigen Maschinenachsen.

Mit einer Datenbasis mit mechatronischen Kenngrößen entsteht eine Möglichkeit für einen qualifizierten Vergleich zum Beispiel zweier bei verschiedenen Maschinen desselben Maschinentyps aufgenommener mechatronischer Kenngrößen. Bei einer umfassenden Datenbasis kann für eine mechatronische Kenngröße eines Maschinentyps zum Beispiel ein Mittelwert oder ein sonstiger statistisch aussagekräftiger Wert ermittelt werden und eine bei einer zu prüfenden Maschine desselben Typs ermittelte mechatronische Kenngröße dazu in Beziehung gesetzt werden. Weitere Einzelheiten ergeben sich aus der parallelen europäischen Patentanmeldung 17167865.9 mit dem Titel "Verfahren und Vorrichtung zur Bewertung zumindest einer mechatronischen Kenngröße einer Produktions- oder Werkzeugmaschine".

Ein weiterer Vorteil eines nach dem hier vorgeschlagenen Ansatz generierten Steuerungsprogramms besteht darin, dass dieses nicht an eine bestimmte Maschinensteuerung und dessen Steuerungssoftware gebunden ist, so dass das Ausführen der Messfahrten und deren Auswertung für Produktions- und/oder Werkzeugmaschinen unterschiedlichster Hersteller möglich ist.

Bezüglich einer nach dem Verfahren arbeitenden Vorrichtung wird die genannte Aufgabe erfindungsgemäß mittels einer im Folgenden als Verarbeitungseinheit bezeichneten Vorrichtung mit den Merkmalen des parallelen Vorrichtungsanspruchs gelöst. Vorteilhafte Ausgestaltungen ergeben sich aus einer Umsetzung einzelner oder mehrerer Merkmale des Anspruchs 1 und der darauf rückbezogenen Ansprüche.

Für die weitere Beschreibung gilt zur Vermeidung unnötiger Wiederholungen, dass Merkmale und Details, die im Zusammenhang mit dem hier vorgeschlagenen Verfahren zur automatischen Generierung eines ausschließlich für Diagnosezwecke bestimmten Steuerungsprogramms für eine Produktions- oder Werkzeugmaschine sowie eventueller Ausgestaltungen beschrieben sind, selbstverständlich auch im Zusammenhang mit und im Hinblick auf die zur Durchführung des Verfahrens eingerichtete Verarbeitungseinheit und umgekehrt gelten, so dass das Verfahren auch mittels einzelner oder mehrerer Verfahrensmerkmale fortgebildet sein kann, die sich auf von der Verarbeitungseinheit ausgeführte Verfahrensschritte beziehen, und die Verarbeitungseinheit entsprechend auch durch Mittel zur Ausführung von im Rahmen des Verfahrens ausgeführten Verfahrensschritten fortgebildet sein kann. Entsprechend gelten Merkmale und Details, die im Zusammenhang mit dem gegenständlichen Verfahren und eventuellen Ausgestaltungen beschrieben sind, selbstverständlich auch im Zusammenhang mit und im Hinblick auf die zur Durchführung des Verfahrens bestimmte Verarbeitungseinheit und jeweils umgekehrt, so dass bezüglich der Offenbarung zu den einzelnen Aspekten der Erfindung stets wechselseitig Bezug genommen wird bzw. werden kann.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform des gegenständlichen Verfahrens / der gegenständlichen Vorrichtung nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen. Schließlich ist darauf hinzuweisen, dass das hier angegebene Verfahren auch entsprechend der abhängigen Vorrichtungsansprüche weitergebildet sein kann und umgekehrt.

Bei einer Ausführungsform des Verfahrens umfasst das in Form des automatisch generierten Steuerungsprogramms definierte Verfahrprofil eine Mehrzahl von Messfahrten zur Bestimmung jeweils unterschiedlicher mechatronischer Kenngrößen. Dann können im Rahmen der Ausführung eines automatisch generierten Steuerungsprogramms eine Mehrzahl mechatronischer Kenngrößen erfasst werden.

Bei einer weiteren Ausführungsform des Verfahrens umfasst das Verfahrprofil in unterschiedlichen Abschnitten jeweils zumindest eine Messfahrt zur Bestimmung jeweils einer mechatronischen Kenngröße. Während eines Abschnitts eines resultierenden derartigen Verfahrprofils wird zum Beispiel die Reibung der Maschinenachse in Abhängigkeit von der gefahrenen Geschwindigkeit aufgezeichnet und daraus eine die Achse und deren Zustand charakterisierende mechatronische Kenngröße ermittelt. Ein anderer Abschnitt des Verfahrprofils ermöglicht zum Beispiel die Feststellung von Fehlern in einem Kugelgewindetrieb, wenn zwei Messsysteme (Motormesssystem und direktes Messsystem) an der Achse vorliegen. In einem wieder anderen Abschnitt kann anhand von Beschleunigungssprüngen als mechatronische Kenngröße die Achssteifigkeit ermittelt werden. In einem nochmals weiteren Abschnitt kann als mechatronische Kenngröße die Lose der Achse bestimmt werden und so weiter.

Die oben genannte Aufgabe wird auch mit einer Verarbeitungseinheit gelöst, die nach dem Verfahren wie hier und im Folgenden beschrieben arbeitet und dazu Mittel zur Durchführung des Verfahrens umfasst.

Bevorzugt ist das hier und im Folgenden beschriebene Verfahren zwecks automatischer Ausführung mittels der Verarbeitungseinheit in Form eines Computerprogramms mit einem Algorithmus zur des Verfahrens realisiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch eine Verarbeitungseinheit oder eine Maschinensteuerung einer Produktions- oder Werkzeugmaschine, in deren Speicher als Mittel zur Durchführung des Verfahrens und seiner Ausgestaltungen ein solches Computerprogramm geladen oder ladbar ist.

Wenn im Folgenden Verfahrensschritte oder Verfahrensschrittfolgen beschrieben werden, bezieht sich dies auf Aktionen, die aufgrund des Computerprogramms oder unter Kontrolle des Computerprogramms erfolgen, sofern nicht ausdrücklich darauf hingewiesen ist, dass einzelne Aktionen durch einen Benutzer des Computerprogramms veranlasst werden. Zumindest bedeutet jede Verwendung des Begriffs "automatisch", dass die betreffende Aktion aufgrund des Computerprogramms oder unter Kontrolle des Computerprogramms erfolgt.

Anstelle eines Computerprogramms mit einzelnen Programmcodeanweisungen kann die des hier und im Folgenden beschriebenen Verfahrens auch in Form von Firmware erfolgen. Dem Fachmann ist klar, dass anstelle einer Implementierung eines Verfahrens in Software stets auch eine in Firmware oder in Firm- und Software oder in Firmund Hardware möglich ist. Daher soll für die hier vorgelegte Beschreibung gelten, dass von dem Begriff Software oder dem Begriff Computerprogramm auch andere Implementierungsmöglichkeiten, nämlich insbesondere eine in Firmware oder in Firm- und Software oder in Firm- und Hardware, umfasst sind.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen

FIG 1     ein Verfahrprofil einer Maschinenachse einer Produktions- oder Werkzeugmaschine,

FIG 2    eine schematisch vereinfachte Übersichtsdarstellung des hier vorgeschlagenen Ansatzes,

FIG 3    einen Beschleunigungssprung und

FIG 4    eine Verfahrkurve mit Beschleunigungssprüngen und Konstantgeschwindigkeitsfahrten.

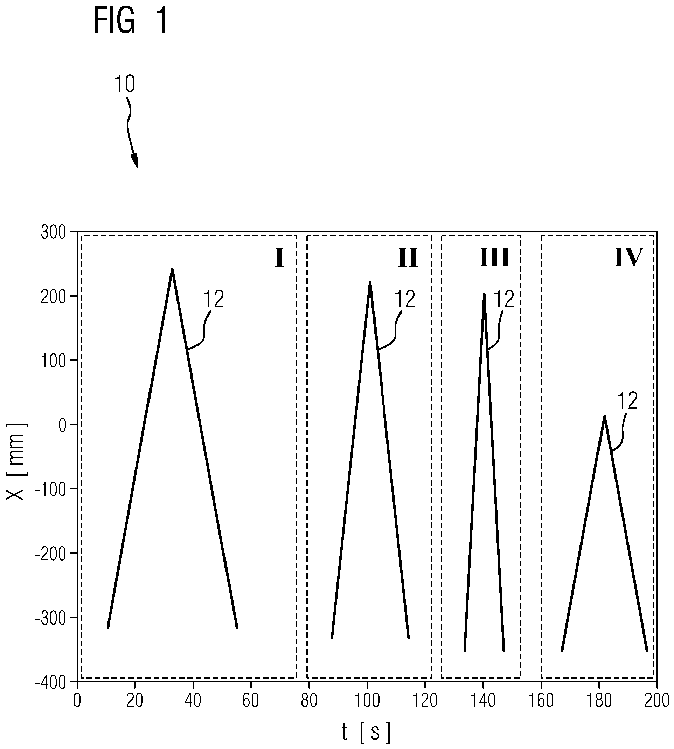

Die Darstellung in FIG 1 zeigt exemplarisch ein Verfahrprofil 10 einer Achse einer selbst nicht gezeigten, an sich bekannten und grundsätzlich beliebigen Produktions- oder Werkzeugmaschine, insbesondere einer solchen Maschine in Form einer Werkzeugmaschine, eines Industrieroboters und dergleichen (wie eingangs genannt). Das Verfahrprofil 10 umfasst zwecks Bestimmung oder Auswertung mechatronischer Kenngrößen der jeweiligen Achse der Produktions- oder Werkzeugmaschine einzelne Messfahrten 12.

Solche Verfahrprofile 10 werden derzeit allenfalls manuell erstellt. Einzelne Abschnitte des Verfahrprofils 10 bilden mit den dortigen jeweiligen Messfahrten 12 die Basis für eine Ermittlung unterschiedlicher mechatronischer Kenngrößen der bei der Messfahrt 12 bewegten Achse oder Achsen. Beim in FIG 1 gezeigten Beispiel umfasst das Verfahrprofil 10 eine Mehrzahl von Abschnitten (I, II, III, IV), wobei in jedem Abschnitt eine Messfahrt 12 zur Bestimmung einer mechatronischen Kenngröße oder im Wesentlichen einer mechatronischen Kenngröße erfolgt. Die Darstellung der gezeigten Messfahrten 12 ist ausschließlich beispielhaft zu verstehen und insoweit zeigt die Darstellung in jedem Abschnitt nur einen "Hinweg" (Plusfahrt) und einen "Rückweg" (Minusfahrt) der jeweiligen Vorschubachse.

Bei der in FIG 1 gezeigten Situation umfasst das Verfahrprofil 10 exemplarisch vier Abschnitte. Grundsätzlich kann ein zur Ermittlung mechatronischer Kenngrößen bestimmtes Verfahrprofil 10 mehr oder weniger als vier Abschnitte umfassen. Bevorzugt umfasst das Verfahrprofil 10 für jede zu ermittelnde mechatronische Kenngröße einen Abschnitt, nämlich einen Abschnitt, in welchem mittels der dort definierten Messfahrt 12 eine zur Ermittlung der jeweiligen mechatronischen Kenngröße besonders günstige Anregung der jeweiligen Vorschubachse erfolgt.

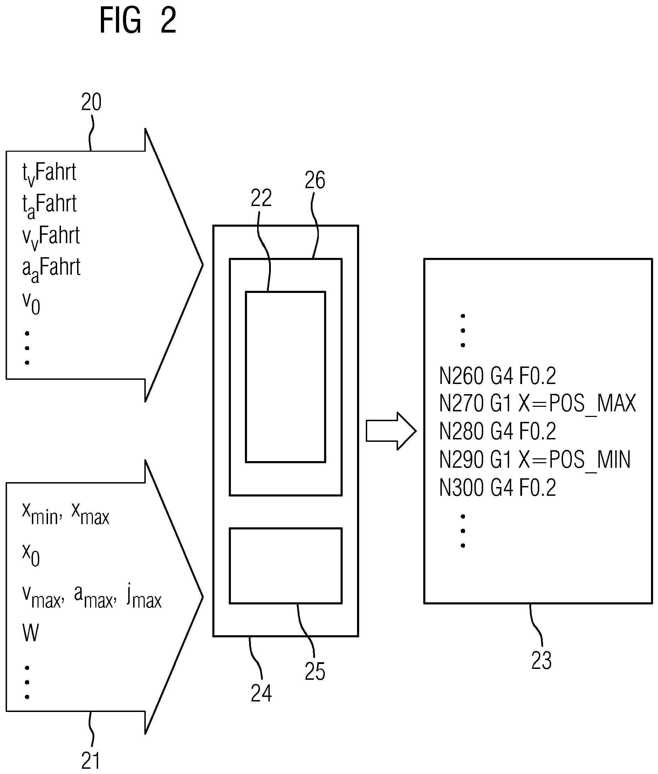

In der Praxis ist die Gestaltung solcher Messfahrten 12 abhängig von den zu ermittelnden mechatronischen Kenngrößen und einzelnen Achseigenschaften. Dieser Zusammenhang ist in FIG 2 schematisch vereinfacht gezeigt.

Bei den zu ermittelnden mechatronischen Kenngrößen handelt es sich insbesondere um die Kenngröße "Reibung", die Kenngröße "Steifigkeit" und die Kenngröße "Lose". Eine optionale weitere mechatronische Kenngröße beschreibt einen Fehler in einem Kugelgewindetrieb (KGT).

Die Darstellung in FIG 2 zeigt frei wählbare Parameter 20 sowie maschinenspezifische Parameter 21 als Eingangsdaten für einen Algorithmus 22 zur Generierung eines Steuerungsprogramms 23 für eine jeweilige Maschine, insbesondere zur Generierung eines Steuerungsprogramms 23 in Form eines NC-Programms.

Zur Ausführung des Algorithmus 22 und zur Generierung des Steuerungsprogramms 23 im Rahmen der Ausführung des Algorithmus 22 ist eine Verarbeitungseinheit 24 vorgesehen. Diese umfasst in grundsätzlich an sich bekannter Art und Weise einen Mikroprozessor 25 oder dergleichen sowie einen Speicher 26, in den der Algorithmus 22 in Form von oder als Teil eines Computerprogramms 22 ladbar und beim Betrieb der Verarbeitungseinheit 24 geladen ist. Die Verarbeitungseinheit 24 kann Teil der Maschinensteuerung der jeweiligen Maschine sein, derart, dass die Verarbeitungseinheit 24 einen Mikroprozessor oder dergleichen der Maschinensteuerung für die Ausführung des Algorithmus 22 und als Speicher einen Teil eines Speichers der Maschinensteuerung der Produktions- oder Werkzeugmaschine nutzt. Die Verarbeitungseinheit 24 kann auch von der jeweiligen Maschine und deren Maschinensteuerung unabhängig sein, derart, dass mittels der Verarbeitungseinheit 24 fallweise ein Steuerungsprogramm 23 für die jeweilige Maschine generiert oder modifiziert wird und dieses in grundsätzlich an sich bekannter Art und Weise in den Speicher der Maschinensteuerung der Maschine geladen wird.

Zu den frei wählbaren Parametern 20 gehört zum Beispiel eine symbolisch mit $t_{vFahrt}$ bezeichnete Dauer einer Fahrt mit konstanter Geschwindigkeit (Konstantgeschwindigkeitsfahrt). Die Dauer wird zum Beispiel in Sekunden angegeben. Des Weiteren sind in der Darstellung in FIG 2 als frei wählbare Parameter 20 eine symbolisch mit $t_{aFahrt}$ bezeichnete Dauer einer Fahrt mit konstanter Beschleunigung (Konstantbeschleunigungsfahrt), eine symbolisch mit $v_{vFahrt}$ bezeichnete Geschwindigkeit einer Konstantgeschwindigkeitsfahrt sowie eine symbolisch mit $a_{aFahrt}$ bezeichnete Beschleunigung einer Konstantbeschleunigungsfahrt gezeigt. Die Dauer ($t_{vFahrt}$, $t_{aFahrt}$) wird in Sekunden angegeben. Die Geschwindigkeit ($v_{vFahrt}$) wird in m/s (Meter pro Sekunde) angegeben. Die Beschleunigung ($a_{aFahrt}$) wird in m/s$^2$ angegeben. Zu den frei wählbaren und damit vorgebbaren Parametern 20 gehört ebenso eine in m/s (Meter pro Sekunde) angegebene Anfangsgeschwindigkeit $v_0$ zum Zeitpunkt t=0. Die frei wählbaren Parameter 20 werden beispielsweise von Spezialisten festgelegt, insbesondere von Spezialisten eines Herstellers einer jeweiligen Maschine oder Maschinenachse.

Die maschinenspezifischen Parameter 21 werden optional automatisch aus einer Maschinensteuerung (nicht gezeigt) der jeweiligen Maschine (Produktions- oder Werkzeugmaschine) ausgelesen. Zu den maschinenspezifischen Parametern 21 gehören insbesondere die symbolisch mit $x_{min}$, $x_{max}$ bezeichneten Fahrwegsgrenzen der jeweiligen Maschinenachse, Maximalwerte bezüglich Geschwindigkeit, Beschleunigung und Ruck ($v_{max}$, $a_{max}$, $j_{max}$), eine aktive Nullpunktverschiebung $x_0$ sowie ein jeweils aktives Werkzeug $W$.

Kurz gefasst erfolgt die automatische Generierung eines Steuerungsprogramms 23 für eine jeweilige Maschine, indem auf Basis der frei wählbaren Parametern 20 sowie der maschinenspezifischen Parameter 21 für jede zu bestimmende mechatronische Kenngröße zumindest eine Messfahrt 12 spezifiziert wird, welche zu einer zur Ermittlung der jeweiligen mechatronischen Kenngröße besonders günstigen Anregung der jeweiligen Maschinenachse führt. In dem automatisch generierten Steuerungsprogramm 23 wird eine Messfahrt 12 zur Ermittlung der mechatronischen Kenngröße "Steifigkeit" (Messfahrt 12 zur Steifigkeitsermittlung) unter anderem zum Beispiel durch eine während der Messfahrt 12 geltende maximale Beschleunigung definiert. Darüber hinaus wird eine solche Messfahrt 12 in dem automatisch generierten Steuerungsprogramm 23 durch die zu fahrende Weglänge definiert. Diese Parameter einer Messfahrt 12 sind das Ergebnis algebraischer Rechenoperationen, die Bestandteil des Algorithmus 22 sind. Mittels des Algorithmus 22 werden also anhand der frei wählbaren Parameter 20 und/oder der maschinenspezifischen Parameter 21 die oben genannte maximale Beschleunigung während der Messfahrt 12 zur Steifigkeitsermittlung sowie die zu fahrende Weglänge ermittelt. Weiter werden mittels des Algorithmus 22 die ermittelten Ergebnisse in Programmcodeanweisungen des automatisch generierten Steuerungsprogramms 23 umgesetzt, so dass bei einer Ausführung des Steuerungsprogramms 23 auf einer dafür geeigneten Maschine eine Messfahrt 12 mit der ermittelten Weglänge und mit der ermittelten Beschleunigung resultiert. Für andere mechatronische Kenngrößen gilt dies entsprechend, beispielsweise für die Ermittlung einer maximalen Weglänge einer Messfahrt 12 zur Reibungsermittlung oder eine Ermittlung einer maximal möglichen Anzahl von Beschleunigungssprüngen einer Messfahrt 12 zur Steifigkeitsermittlung.

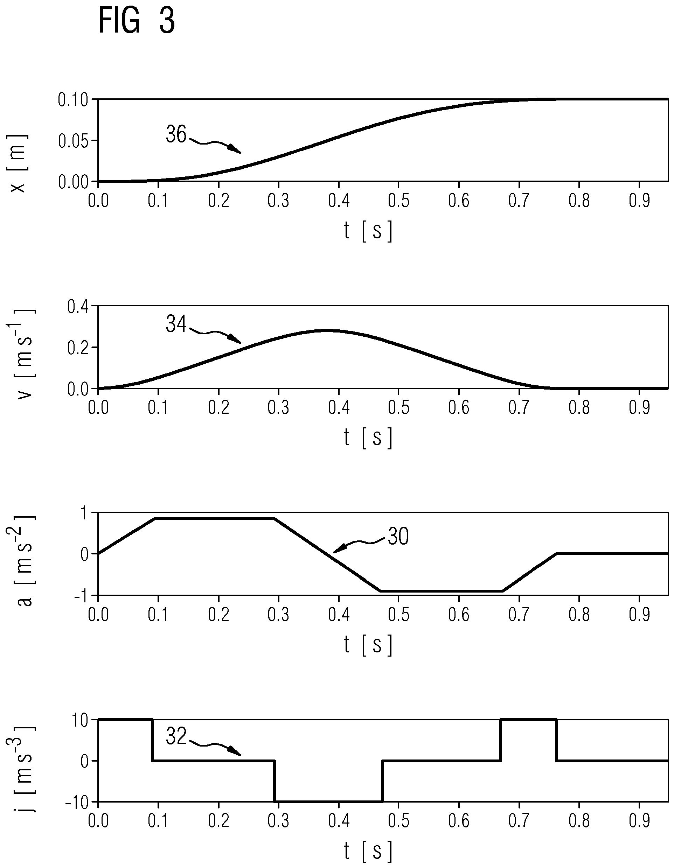

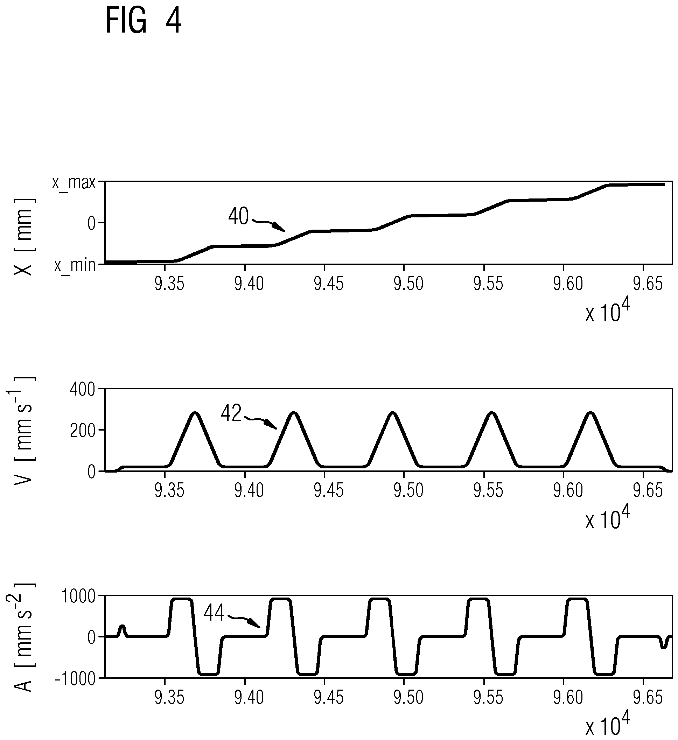

Exemplarisch wird im Folgenden anhand der Darstellungen in FIG 3 und FIG 4 die Ermittlung einer maximal möglichen Anzahl von Beschleunigungssprüngen während einer Messfahrt 12 beschrieben.

Für einen einzelnen Beschleunigungssprung - Bezugsziffer 30 -, wie er exemplarisch in FIG 3 gezeigt ist, und aus kurzen, konstanten Ruckfahrten mit dem maximal möglichen Ruck J $(J = j_{max})$ der jeweiligen Achse (in m/s$^3$) sowie einer Beschleunigungsphase der Länge $T$ $(T = t_{aFahrt})$ ergibt sich der Weg $X_{Sprung}$:

$$X_{Sprung} = \left(\left(A + JT\right) \cdot \left(2A^2 + JAT + 2JV_0\right)\right)/J^2$$

Die Darstellung in FIG 3 zeigt - jeweils über der Zeit $t$ aufgetragen - neben dem Beschleunigungssprung 30 das zugrunde liegende Ruckprofil 32 sowie ein resultierendes Geschwindigkeitsprofil 34 und die Verfahrkurve 36 eines einzelnen Beschleunigungssprungs.

Insgesamt sollen jedoch eine vorgegebene oder vorgebbare Anzahl $N$ von Beschleunigungssprüngen der in FIG 3 gezeigten Art hintereinander gefahren werden, wobei vor und nach jedem Beschleunigungssprung zum Zwecke des Erhalts der Vorspannung des Antriebsstrangs eine Konstantgeschwindigkeitsfahrt, insbesondere eine langsame Konstantgeschwindigkeitsfahrt, erfolgt. Eine resultierende Verfahrkurve 40 (FIG 4) umfasst also insgesamt $N$ Beschleunigungssprünge und $N+1$ Konstantgeschwindigkeitsfahrten.

Die Darstellung in FIG 4 zeigt mit der Verfahrkurve 40 einen vergrößerten Ausschnitt aus dem Verfahrprofil 10 gemäß FIG 1, wobei auf der Abszisse die Zeit und auf der Ordinate der Weg in Millimetern abgetragen ist. In den weiteren Darstellungen in FIG 4 sind unterhalb der Verfahrkurve 40 und über derselben Zeitbasis die Geschwindigkeit V - Bezugsziffer 42 - in mm/s und die Beschleunigung A - Bezugsziffer 44 - in mm/s$^2$ gezeigt.

Der Gesamtweg $X_{Gesamtweg}$ beträgt bei $N$ Beschleunigungssprüngen:

$$X_{Gesamtweg} = \left(t_{vFahrt} \cdot v_{vFahrt} \cdot \left(N + 1\right)\right) + N \cdot X_{Sprung}$$
$$= \left(t_{vFahrt} \cdot v_{vFahrt} \cdot \left(N + 1\right)\right) + N\left(\left(A + JT\right) \cdot \left(2A^2 + JAT + 2JV_0\right)\right)/J^2$$

Aufgelöst nach $N$ erhält man eine maximale Anzahl $N_{max}$ an möglichen Beschleunigungssprüngen für einen limitierten Fahrweg $Xmax$ einer bestimmten Maschinenachse:

$$N_{max} = \left(X_{max} - t_{vFahrt} \cdot v_{vFahrt}\right)/\left(t_{vFahrt} \cdot v_{vFahrt} + \left(\left(A + JT\right) \cdot \left(2A^2 + JAT + 2JV_0\right)\right)/J^2\right)$$

Ist $N_{max}$ nicht ganzzahlig, wird abgerundet.

Die beschriebenen Berechnungen sowie die abschließende Ermittlung der innerhalb des gegebenen Verfahrwegs $Xmax$ maximal möglich Anzahl $N_{max}$ an möglichen Beschleunigungssprüngen werden gemäß dem Algorithmus 22 mittels einer den Algorithmus 22 ausführenden Verarbeitungseinheit 24 ausgeführt und die Verarbeitungseinheit 24 ist mittels des in den Speicher 26 geladenen Algorithmus 22 / Computerprogramms 22 zur Ausführung dieser Berechnungen und Ermittlungen bestimmt und eingerichtet.

Mit den so mittels des Algorithmus 22 berechneten Daten lässt sich - ebenfalls mittels des Algorithmus 22 - ein Steuerungsprogramm 23 für eine Maschinenachse einer Produktions- und/oder Werkzeugmaschine generieren. Bei einer Produktions- oder Werkzeugmaschine mit mehreren Maschinenachsen kann der Algorithmus 22 selbstverständlich für jede einzelne Maschinenachse oder einzelne Maschinenachsen oder eine Gruppe von Maschinenachsen ausgeführt werden.

Beim Ausführen eines mittels des Algorithmus 22 automatisch generierten Steuerungsprogramms 23 auf einer jeweiligen Maschine (Produktions- oder Werkzeugmaschine) werden mittels einer grundsätzlich an sich bekannten Sensorik und/oder durch Auslesen charakteristischer Werte, zum Beispiel Strom und/oder Spannung, aus einer Antriebssteuerung der Maschine oder einer Maschinenachse Messwerte erfasst, auf deren Basis die Ermittlung zumindest einer mechatronischen Kenngröße möglich ist.

Einzelne im Vordergrund stehende Aspekte der hier eingereichten Beschreibung lassen sich damit kurz wie folgt zusammenfassen: Angegeben werden ein Verfahren und eine nach dem Verfahren arbeitende Vorrichtung zur automatischen Generierung eines für Diagnosezwecke bestimmten Steuerungsprogramms 23 für eine Produktions- oder Werkzeugmaschine. Das Steuerungsprogramm 23 wird mittels eines Algorithmus 22 anhand von frei wählbaren Parametern 20 und/oder maschinenspezifischen Parametern 21 generiert. Das resultierende, automatisch generierte Steuerungsprogramm 23 definiert ein Verfahrprofil 10, nämlich ein Verfahrprofil 10 mit zumindest einer Messfahrt 12, für zumindest eine Achse der jeweiligen Produktions- oder Werkzeugmaschine. Die zumindest eine Messfahrt 12 bewirkt eine zur Bestimmung zumindest einer mechatronischen Kenngröße der jeweiligen Achse geeignete Anregung dieser Achse. Das automatisch generierte Steuerungsprogramm 23 ist damit die Basis für eine mechatronische Maschinenanalyse, welche ohne solche automatisch generierten Steuerungsprogramme 23 und die dabei erhältlichen mechatronischen Kenngrößen praktisch nicht durchführbar ist, zumindest nicht wirtschaftlich sinnvoll durchführbar ist.

## Patentansprüche

1. Verfahren zur automatischen Generierung eines für Diagnosezwecke bestimmten Steuerungsprogramms (23) für eine Produktions- oder Werkzeugmaschine,

   wobei das Steuerungsprogramm (23) mittels eines Algorithmus (22) anhand von frei wählbaren Parametern (20) und/oder maschinenspezifischen Parametern (21) generiert wird,
   wobei das resultierende, automatisch generierte Steuerungsprogramm (23) ein Verfahrprofil (10), nämlich ein Verfahrprofil (10) mit zumindest einer Messfahrt (12), für zumindest eine Achse der jeweiligen Produktions- oder Werkzeugmaschine definiert und
   wobei die zumindest eine Messfahrt (12) eine zur Bestimmung zumindest einer mechatronischen Kenngröße der jeweiligen Achse geeignete Anregung dieser Achse bewirkt, **dadurch gekennzeichnet, dass** für eine Messfahrt (12) anhand eines vorgegebenen limitierten Fahrwegs $Xmax$ eine Anzahl $N$ von möglichen Beschleunigungssprüngen entlang des Fahrwegs $Xmax$ ermittelt wird und

   die Messfahrt (12) die ermittelte Anzahl von Beschleunigungssprüngen und vor und nach jedem Beschleunigungssprung eine Konstantgeschwindigkeitsfahrt umfasst.

2. Verfahren nach Anspruch 1,
   wobei bei der Messfahrt (12) Verfahrbewegungen mit maximalen Geschwindigkeiten oder maximalen Beschleunigungen resultieren.

3. Verfahren nach Anspruch 1 oder 2, wobei das in Form des automatisch generierten Steuerungsprogramms (23) definierte Verfahrprofil (10) eine Mehrzahl von Messfahrten (12) zur Bestimmung jeweils unterschiedlicher mechatronischer Kenngrößen umfasst.

4. Verfahren nach Anspruch 3, wobei das Verfahrprofil (10) in unterschiedlichen Abschnitten jeweils zumindest eine Messfahrt (12) zur Bestimmung jeweils einer mechatronischen Kenngröße umfasst.

5. Verarbeitungseinheit (24), welche zur Generierung eines Steuerungsprogramms (23) für eine Produktions- oder Werkzeugmaschine bestimmt und eingerichtet ist und zwecks Generierung eines solchen Steuerungsprogramms (23) Mittel (22) zur Ausführung des Verfahrens nach einem der vorangehenden Ansprüche umfasst.

6. Computerprogramm (22) mit Programmcodemitteln, um alle Schritte von jedem beliebigen der Ansprüche 1 bis 4 durchzuführen, wenn das Computerprogramm (22) mittels einer Verarbeitungseinheit (24) nach Anspruch 5 ausgeführt wird.

7. Computerprogrammprodukt mit Programmcodemitteln, die auf einem computerlesbaren Datenträger gespeichert sind, um das Verfahren nach jedem beliebigen der Ansprüche 1 bis 4 durchzuführen, wenn das Computerprogrammprodukt auf einer Verarbeitungseinheit (24) nach Anspruch 5 ausgeführt wird.

8. Verarbeitungseinheit (24) nach Anspruch 5, mit einem Mikroprozessor (25) und einem Speicher (26), in den ein Computerprogramm (22) nach Anspruch 6 geladen ist, das beim Betrieb der Verarbeitungseinheit (24) mittels des Mikroprozessors (25) ausgeführt wird.

**Claims**

1. Method for automatically generating a control program (23) for a production machine or machine tool which is designed for diagnostic purposes,

   wherein the control program (23) is generated by means of an algorithm (22) using freely selectable parameters (20) and/or machine-specific parameters (21),
   wherein the resulting, automatically generated control program (23) defines a movement profile (10), namely a movement profile (10) with at least one test run (12), for at least one axis of the respective production machine or machine tool and
   wherein the at least one test run (12) produces an axis excitation which is suitable for determining at least one mechatronic characteristic variable of the respective axis, **characterised in that** a number N of possible acceleration jumps along the travel distance $X_{max}$ are determined for a test run (12) on the basis of a predetermined limited travel distance $X_{max}$ and

   the test run (12) comprises the determined number of acceleration jumps and comprises a constant speed run before and after each acceleration jump.

2. Method according to claim 1,
   wherein the test run (12) results in travel movements with maximum speeds or maximum accelerations.

3. Method according to claim 1 or 2, wherein the movement profile (10) defined in the form of the automatically generated control program (23) comprises a plurality of test runs (12) for determining a variety of mechatronic characteristic variables.

4. Method according to claim 3, wherein in different sections the movement profile (10) respectively comprises at least one test run (12) for determining a respective mechatronic characteristic variable.

5. Processing unit (24) which is designed and set up for generating a control program (23) for a production machine or machine tool and, for the purpose of generating such a control program (23), comprises means (22) for carrying out the method according to one of the preceding claims.

6. Computer program (22) having program code means for performing all the steps of any of claims 1 to 4 when the computer program (22) is executed by means of a processing unit (24) according to claim 5.

7. Computer program product having program code means stored on a computer readable medium in order to carry out the method according to any of claims 1 to 4 when the computer program product is executed on a processing unit (24) according to claim 5.

8. Processing unit (24) according to claim 5, comprising a microprocessor (25) and a memory (26) into which a computer program (22) according to claim 6 is loaded, which is executed by means of the microprocessor (25) during operation of the processing unit (24).

**Revendications**

1. Procédé de création automatique d'un programme (23), destiné à des fins de diagnostic, de commande d'une machine de production ou d'une machine-outil,

   dans lequel on crée le programme (23) de commande au moyen d'un algorithme (22) à l'aide de paramètres (20) pouvant être choisis librement et/ou de paramètres (21) spécifiques à la machine,

dans lequel le programme (23) de commande résultant créé automatiquement définit un profil (10) de déplacement, à savoir un profil (10) de déplacement ayant au moins une course (12) de mesure d'au moins un axe de la machine de production ou de la machine-outil respective et

dans lequel la au moins une course (12) de mesure provoque une excitation de cet axe appropriée à la détermination d'au moins une grandeur caractéristique mécano-électronique de l'axe respectif, **caractérisé en ce que** pour une course (12) de mesure, on détermine, à l'aide d'un chemin $Xmax$ de déplacement limité donné à l'avance, un nombre $N$ de sauts d'accélération possibles le long du chemin $X_{max}$ et

la course (12) de mesure comprend le nombre déterminé de sauts d'accélération et avant ou après chaque saut d'accélération, une course à vitesse constante.

2. Procédé suivant la revendication 1,
dans lequel il résulte de la course (12) de mesure des mouvements de déplacement à vitesses maximum ou à accélérations maximum.

3. Procédé suivant la revendication 1 ou 2, dans lequel le profil (10) de déplacement, défini sous la forme du programme (23) de commande créé automatiquement, comprend une pluralité de courses (12) de mesure pour la détermination de grandeurs caractéristiques mécano-électroniques différentes.

4. Procédé suivant la revendication 3, dans lequel le profil (10) de déplacement comprend dans des tronçons différents respectivement au moins une course (12) de mesure pour la détermination respectivement d'une grandeur caractéristique mécano-électronique.

5. Unité (24) de traitement, qui est destinée et conçue pour la création d'un programme (23) de commande d'une machine de production ou d'une machine-outil et qui comprend, en vue de créer un programme (23) de commande de ce genre, des moyens (22) pour effectuer le procédé suivant l'une des revendications précédentes.

6. Programme (22) d'ordinateur, comprenant des moyens de code de programme, pour effectuer tous les stades de chacune quelconque des revendications 1 à 4, lorsque le programme (22) d'ordinateur est réalisé au moyen d'une unité (24) de traitement suivant la revendication 5.

7. Produit de programme d'ordinateur comprenant des moyens de code de programme, qui sont mis en mémoire sur un support de données déchiffrables par ordinateur, pour effectuer le procédé suivant l'une quelconque des revendications 1 à 4, lorsque le produit de programme d'ordinateur est réalisé sur une unité (24) de traitement suivant la revendication 5.

8. Unité (24) de traitement suivant la revendication 5, comprenant un microprocesseur (25) et une mémoire (26), dans laquelle est chargé un programme (22) d'ordinateur suivant la revendication 6, qui est réalisé au moyen du microprocesseur (25) lors du fonctionnement de l'unité (24) de traitement.

FIG 1

# FIG 2

$t_v$Fahrt
$t_a$Fahrt
$v_v$Fahrt
$a_a$Fahrt
$v_0$
...

20

22    26

$x_{min}$, $x_{max}$

$x_0$

$v_{max}$, $a_{max}$, $j_{max}$

W

...

21

24    25

N260 G4 F0.2
N270 G1 X=POS_MAX
N280 G4 F0.2
N290 G1 X=POS_MIN
N300 G4 F0.2

23

## FIG 3

FIG 4

**EP 3 602 215 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2690513 A1
- EP 3176657 A1
- EP 17167865